Europäisches Patentamt

European Patent Office

Office européen des brevets

(11) Publication number: **0 548 854 A1**

# EUROPEAN PATENT APPLICATION

(21) Application number: **92121622.2**

(22) Date of filing: **18.12.92**

(51) Int. Cl.5: **B62D 6/00**

(30) Priority: **20.12.91 IT TO911005**

(43) Date of publication of application:
**30.06.93 Bulletin 93/26**

(84) Designated Contracting States:
**DE ES FR GB IT SE**

(71) Applicant: **CENTRO RICERCHE FIAT S.p.A.**
**Strada Torino 50**
**I-10043 Orbassano, (Torino)(IT)**

(72) Inventor: **Lorenzini, Alessandro**

Via Agnelo Olivieri, 72
I-00122 Lido di Ostia(IT)
Inventor: **Lupo, Giorgio**
**Via Domodossola, 10, Villaggio Aurora**
**I-10040 Rivalta(IT)**
Inventor: **Palazzetti, Mario**
**Via Don Balbiano, 14/A**
**I-10051 Avigliana(IT)**

(74) Representative: **Jorio, Paolo et al**
**Studio Torta, Via Viotti, 9**
**I-10121 Torino (IT)**

(54) **Steering system for instantaneous steering ration control.**

(57) A steering system (1) having a steering wheel (3); a steering box (4) with an input pinion (5); and a device (7) interposed between the steering wheel (3) and the steering box (4), for varying the total steering ratio ($\tau$tot) as a function of the speed, lateral acceleration and yaw velocity of the vehicle; the device (7) presenting an electric motor (9) controlled by a control system (10), and an epicyclic train (8) having a first member (18) angularly integral with the steering wheel (3), a second member (20) angularly integral with the pinion (5) of the steering box (4), and a third member (22) connected angularly to the electric motor (9).

Fig.1

The present invention relates to a steering system for instantaneous steering ratio control.

Vehicle wheel steering systems are known to comprise a steering wheel, a steering box, and a linkage cooperating with the steering box for achieving a given "steering ratio", by which is meant the ratio between the number of turns of the steering wheel and the maximum rotation angle of each wheel about a respective substantially vertical axis, i.e. the number of turns of the steering wheel required for achieving the maximum steering angle of the wheels.

The steering ratio is invariably a fixed value, normally three, which represents a compromise between two conflicting requirements:

Firstly, the need at medium and low speed for a steering ratio as close as possible to 1 (direct control) for enabling troublefree steering, as when maneuvering the vehicle.

Secondly, the need at high speed for a geared-down, i.e. high, steering ratio, for ensuring safe control of the vehicle. That is, for reducing the steering response of the vehicle and so preventing dangerous side skidding in the event of a sharp movement of the steering wheel by the user.

It is an object of the present invention to provide a steering system for instantaneous steering ratio control, whereby the steering ratio may be so varied as to provide for safe, troublefree vehicle control under all driving conditions, and, in particular, for catering fully to both the abovementioned requirements.

According to the present invention, there is provided a steering system for instantaneous steering ratio control, said system comprising a steering wheel; a steering box having a pinion angularly integral with the steering wheel; and a linkage cooperating with the steering box for defining a predetermined steering ratio between the steering wheel and a pair of wheels on the vehicle; characterized by the fact that it comprises angular connecting means interposed between the steering wheel and the steering box, for continuously varying said steering ratio.

A non-limiting embodiment of the present invention will be described by way of example with reference to the accompanying drawings, in which:

Fig.1 shows, schematically and substantially in block form, a preferred embodiment of the steering system according to the present invention;

Fig.2 shows a section of a detail in the Fig.1 system.

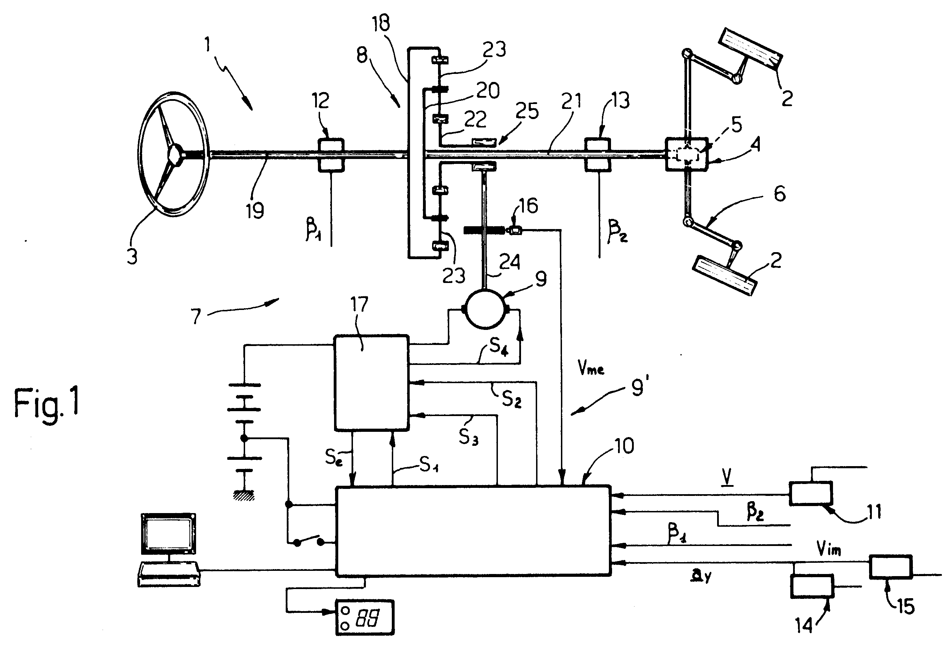

Number 1 in Fig.1 indicates a steering system for instantaneous steering ratio control, comprising a steering wheel 3; a steering box 4 having a pinion 5 connected angularly integral with steering wheel 3; and a linkage indicated as a whole by 6.

System 1 also comprises a device 7 interposed between steering wheel 3 and steering box 4, and in turn comprising an epicyclic train 8, and an electric motor 9 for controlling a member of train 8. Device 7 provides for enabling continuous variation of the total steering ratio ($\tau$tot) of system 1.

Here and hereinafter, the term "total steering ratio" is intended to mean the number of turns of steering wheel 3 required for achieving the maximum steering angle of wheels 2 on the vehicle (not shown). In this specific case, the total steering ratio comprises a first fixed term $\tau$, normally equal to 3 as defined by steering box 4 and linkage 6; and a second variable term defined by epicyclic train 8.

In other words, the following equation applies:

(1)     $\tau$tot = $\tau$ (nv/nu)

where nv and nu respectively indicate the number of turns of steering wheel 3 and the number of turns of pinion 5 of steering box 4, and $\tau$ indicates, as stated, the fixed steering ratio.

Again with reference to Fig.1, device 7 also comprises a unit 9' for controlling electric motor 9 and in turn comprising a control system 10 for supplying electric motor 9 with a control signal at least in response to a signal supplied by a speed sensor 11 also forming part of device 7 and which provides for detecting the speed of the vehicle and supplying a signal $\underline{V}$ to control system 10.

Device 7 also comprises a number of further sensors connected to control system 10, more specifically, a pair of sensors 12 and 13 for respectively detecting the rotation angle of steering wheel 3 and pinion 5 of steering box 4, and supplying respective signals $\beta$1 and $\beta$2; sensor 14 for detecting lateral acceleration ay of the vehicle; sensor 15 for detecting the yaw velocity Vim of the vehicle; and sensor 16 for detecting the speed Wme of electric motor 9.

System 10 controls the speed of electric motor 9 via an electronic power board 17, which is supplied by system 10 with an enabling signal S1, and two signals S2 and S3 respectively proportional to a reference speed of motor 9 and to the actual speed of motor 9 detected by sensor 16. Power board 17 in turn supplies an error signal Se to control system 10, and a control signal S4 to electric motor 9.

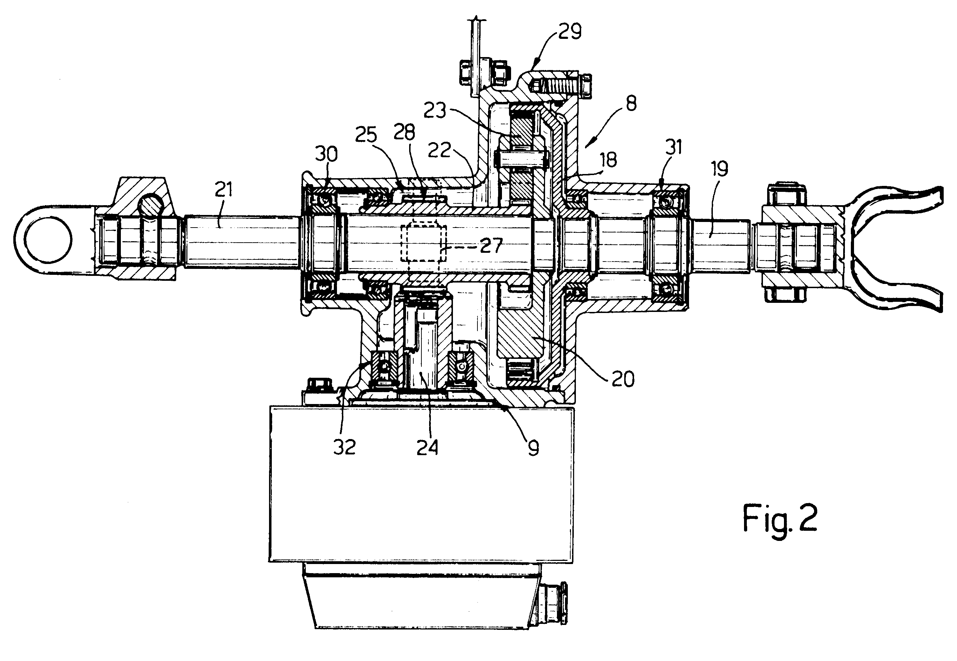

As shown in Fig.1 and more particularly in Fig.2, epicyclic train 8 comprises a ring gear 18 connected in angularly-fixed manner to steering wheel 3 by a first shaft 19; and a planet carrier 20 connected angularly integral with pinion 5 of steering box 4 by a second shaft 21.

Epicyclic train 8 also comprises a sun gear 22 meshing with a number of planetary gears 23 (only one of which is shown in Fig. 2) and rendered angularly integral with the output shaft 24 of electric motor 9 by an irreversible gear mechanism 25. More specifically, mechanism 25 provides for transmitting motion from electric motor 9 to sun gear 22, and not vice versa, conveniently with a gear ratio $\tau m = 25$; and is defined by a worm screw-helical gear system comprising a worm screw 27 fitted to output shaft 24 of electric motor 9, and a gear 28 integral with sun gear 22 and coaxial with second shaft 21.

Again with reference to Fig.2, epicyclic train 8 and electric motor 9 are housed inside an outer casing 29; and first and second shafts 19 and 21 and output shaft 24 of electric motor 9 are connected to outer casing 29 via respective bearings 30, 31 and 32.

In actual use, sensors 11, 14 and 15 respectively detect and communicate to control system 10 the speed, lateral acceleration and yaw velocity of the vehicle.

At this point, as long as the speed of the vehicle remains over and above a given maximum threshold, control system 10 does not enable board 17, so that electric motor 9 is not energized; sun gear 22, by virtue of being angularly connected in irreversible manner to electric motor 9 via mechanism 25, is maintained stationary by motor 9; and system 1 therefore provides for maximum downgearing corresponding to a total steering ratio conveniently in the order of $\tau tot = 4.2$.

As such, rotation of steering wheel 3 by the user results in rotation of ring gear 18 and consequently planetary gears 23 about fixed sun gear 22, and finally, in rotation of planet carrier 20, which activates pinion 5 of steering box 4.

As vehicle speed decreases, sensors 11, 14 and 15 supply respective signals V, ay and Vim to control system 10, which processes the appropriate strategy and enables power board 17, which in turn energizes electric motor 9 so as to rotate sun gear 22. Variable rotation of sun gear 22 as a function of vehicle speed results in continuous variation of ratio nv/nu and, consequently, continuous variation of total steering ratio $\tau tot$.

More specifically, epicyclic train 8 is so designed that, for very low vehicle speeds, as when maneuvering the vehicle, the total steering ratio rtot assumes a value of approximately 1.

When switching from one to the other of the above limit conditions, the speed of electric motor 9 differs according to the speed of the vehicle, and, despite the continuous variation in the total steering ratio and consequently in the torques involved, no corresponding variation in the torque required on steering wheel 3 is discerned by the user. In fact, alongside a reduction in $\tau tot$, for example, the increased torque required on the steering wheel is balanced by the torque exerted on system 1 by electric motor 9, as shown clearly in the following equations.

As is known, to epicyclic trains, the Willis equation applies, which, in the specific case in question, may be expressed as follows:

(2)     ro = -(ns-nu)/(nv-nu)

where ns, nv and nu respectively indicate the number of turns of sun gear 22; steering wheel 3 or ring gear 18; and pinion 5 or planet carrier 20.

In the specific case in question, the following equations also apply:

(3)     Mv + Ms = Mu

(4)     Mv nv + Ms ns = Mu nu

where Mv, Ms and Mu respectively indicate the torques on steering wheel 3 or ring gear 18; sun gear 22; and pinion 5 or planet carrier 20.

An appropriate combination of the above equations gives:

(5)     Mv = ro Mu/(1 + ro)

(6)     Ms = Mu/(1 + ro)

(7)     nv = -nme/$\tau m$ ro + nu(1 + ro)/ro

where nme indicates the number of revolutions of electric motor 9.

Bearing in mind that the following equation also applies: Ms = $\tau m$ Mme
where Mme indicates the torque on shaft 24 of electric motor 9, this gives:

(8)     Mv + $\tau m$ Mme = Mu

Electric motor 9 thus provides for varying the ratio between the number of turns of steering wheel 3, i.e. at the input of train 8, and the number of turns of pinion 5, i.e. at the output of train 8. Moreover, as shown by equation (8), electric motor 9 also provides for additional torque ($\tau m$ Mme), which is added to that exerted on steering wheel 3 by the user, who, as already stated, thus discerns no additional effort on steering wheel 3 at low vehicle speed and with a total steering ratio of approximately 1.

Moreover, the above torque contribution by electric motor 9 is made under any operating condition, i.e. regardless of the set total steering ratio, by virtue, as shown in equations (5) and (6), of the torque ratios depending exclusively on the gear train ratio (ro), which preferably assumes a value of ro = 2.5.

Steering system 1 as described above thus provides for a high degree of reliability, by virtue, firstly, of the irreversible connection of sun gear 22 and electric motor 9, which enables motion to be transmitted from motor 9 to sun gear 22, but not vice versa.

Secondly, the characteristics of steering system 1 and, more specifically, of control system 10 and power board 17, are such as to down-gear system 1 ($\tau$tot = 4.2) in the event of an operating fault on device 7.

To those skilled in the art it will be clear that changes may be made to steering system 1 as described and illustrated herein without, however, departing from the scope of the present invention.

More specifically, changes may be made to the connection of gear train 8 to steering wheel 3 and to pinion 5 of steering box 4; and electric motor 9 may be replaced by another component, for example, connecting two members of gear train 8.

## Claims

1. A steering system (1) for instantaneous steering ratio control, said system (1) comprising a steering wheel (3); a steering box (4) having a pinion (5) angularly integral with the steering wheel (3); and a linkage (6) cooperating with the steering box (4) for defining a predetermined steering ratio between the steering wheel (3) and a pair of wheels (2) on the vehicle; characterized by the fact that it comprises angular connecting means (8) interposed between the steering wheel (3) and the steering box (4), for continuously varying said steering ratio.

2. A system as claimed in Claim 1, characterized by the fact that said angular connecting means comprise an epicyclic train (8) having a first member (18) connected angularly integral with the steering wheel (3); a second member (20) connected angularly integral with the pinion (5) of said steering box (4); and a third member (22) secured angularly to said first (18) and second (20) members; the system (1) also comprising first means (9) for controlling said third member (22); and second means (9') for driving said first means (9) at least as a function of vehicle speed.

3. A system as claimed in Claim 2, characterized by the fact that said first means comprise an electric motor (9) having an output shaft (24) connected angularly integral with said third member (22).

4. A system as claimed in Claim 3, characterized by the fact that said second means (9') comprise a sensor (11) for detecting the speed of the vehicle; a pair of sensors (12) (13) for respectively detecting the angular position of said steering wheel (3) and said pinion (5); a sensor (16) for detecting the speed of said electric motor (9); and a control system (10) for emitting a control signal for said electric motor (9) in response to the signals emitted by said sensors (11) (12) (13) (16).

5. A system as claimed in Claim 4, characterized by the fact that said second means (9') also comprise a sensor (14) for detecting lateral acceleration of the vehicle; and a further sensor (15) for detecting the yaw velocity of the vehicle.

6. A system as claimed in one of the foregoing Claims from 3 to 5, characterized by the fact that said epicyclic train (8) comprises a ring gear (18) angularly integral with said steering wheel (3); a planet carrier (20) angularly integral with the pinion (5) of said steering box (4); and a sun gear (22) connected angularly integral with said electric motor (9) via a gear mechanisms (25).

7. A system as claimed in Claim 6, characterized by the fact that said mechanism (25) is an irreversible mechanism defined by a worm screw-helical gear pair.

Fig.1

EP 0 548 854 A1

Fig. 2

## DOCUMENTS CONSIDERED TO BE RELEVANT

EP 92121622.2

| Category | Citation of document with indication, where appropriate, of relevant passages | Relevant to claim | CLASSIFICATION OF THE APPLICATION (Int. Cl.5) |
|---|---|---|---|
| X | DE - A - 3 830 654 (DAIMLER-BENZ) * Totality * -- | 1,2,6,7 | B 62 D 6/00 |
| X | FR - A - 2 622 857 (RENAULT) * Fig.; abstract * -- | 1,2,6,7 | |
| X | US - A - 4 658 927 (KANAZAWA) * Fig. 2; abstract * -- | 1,2,3 | |
| P,X | GB - A - 2 249 530 (MITSUBISHI) * Totality * -- | 1,2,3,4,6,7 | |
| A | US - A - 3 831 701 (PILON) * Fig. 4; abstract * -- | 2 | |
| A | DE - A - 2 952 087 (DAIMLER-BENZ) * Fig. 1; claim 1 * -- | 1,2 | TECHNICAL FIELDS SEARCHED (Int. Cl.5) |
| A | DE - A - 3 502 577 (AUDI) * Fig. * -- | 1,2 | B 62 D |
| A | US - A - 3 165 943 (SUNDT) * Fig. 2 * -- | 2 | |
| A | US - A - 3 143 006 (KRATOCHWIL) * Fig. 1 * ---- | 2 | |

The present search report has been drawn up for all claims

| Place of search | Date of completion of the search | Examiner |
|---|---|---|
| VIENNA | 29-03-1993 | PANGRATZ |

EPO FORM 1503 03.82 (P0401)